# FASCICULE DE BREVET EUROPEEN

(11) **EP 2 438 343 B1**
(45) Date de publication et mention de la délivrance du brevet: **17.04.2013**
(21) Numéro de dépôt: 10730525.2
(22) Date de dépôt: 21.05.2010
(51) Int. Cl.: F16M 7/00, A47B 91/02

(54) **SUPPORT EXTENSIBLE TELESCOPIE INCREMENTAL**
SCHRITTWEISE AUSZIEHBARE TELESKOPISCHE HALTERUNG
INCREMENTALLY EXTENDABLE TELESCOPIC MOUNTING

(30) Priorité: 03.06.2009 FR 0902672
(43) Date de publication de la demande: 11.04.2012
(73) Titulaire: Rothschild, Philippe, 92140 Clamart (FR)
(72) Inventeur: Rothschild, Philippe, 92140 Clamart (FR)
(86) Numéro de dépôt international: PCT/IB2010/052280
(87) Numéro de publication internationale: WO 2010/140078

(56) Documents cités:
- EP-A2- 1 676 501
- FR-A1- 2 884 294
- FR-A1- 2 898 179

## Description

L'invention porte sur un support télescopique à extension incrémentale dont l'extension est déterminée par la position d'un doigt-guide, solidaire d'une partie femelle, se déplaçant à l'intérieur d'un système de guidage constitué de segments de cames, aménagés à la périphérie d'une partie mâle, et par les positions relatives d'une butée unique, en forme d'arc cylindrique, aménagée sur l'un des éléments télescopiques et prenant appui, successivement sur une série circonférentielle d'arcs cylindriques de butées creuses étagées sur l'autre élément télescopique, ces arcs cylindriques définissant des structures de butées creuses, intégrées intérieurement à leurs éléments télescopiques respectifs et ayant, préférentiellement, les mêmes diamètres, respectivement extérieur et intérieur, et pour centre commun, l'axe du dispositif.

Un support télescopique à extension incrémentale a fait l'objet de la demande FR 2898179.

Or, un tel support télescopique, selon l'art antérieur, présente divers inconvénients.

La résistance des butées à la pression est uniquement déterminée par la longueur des arcs des butées cylindriques.

La résistance des butées à la flexion est structurellement assurée par l'aménagement de cylindres rapportés prenant appui sur les bases intérieures de leurs éléments télescopiques respectifs, leur épaisseur étant par ailleurs limitée par les propriétés du matériau injecté.

L'amplitude d'extension d'un tel support est limitée par la nécessité d'un emboîtement résiduel suffisant des deux éléments cylindriques, mâle et femelle, pour assurer le maintien d'un parfait parallélisme entre leurs axes respectifs, au moment du déploiement du support proche du maximum, c'est-à-dire au niveau des points de jonction des couples de segments descendant et ascendant précédant et suivant ce maximum.

Cet emboîtement insuffisant peut générer, d'une part, des frottements entre parties mâle et femelle, qui nuisent à l'extension du dispositif, par simple gravité, d'autre part, des coincements du doigt-guide, résultant du positionnement non perpendiculaire de son axe par rapport à l'axe de la partie mâle et donc par rapport au fond des segments de came de section en U, mais aussi de l'insuffisance des pentes des segments descendants puis ascendants, parcourues par le doigt avant et après qu'il franchisse le niveau maximum de prise d'appui du support, pour lequel la résistance à la pression est assurée par un seul couple de butées conjuguées ayant une longueur de butée sensiblement plus grande.

En raison aussi de son positionnement à l'extrémité haute des cylindres de butées, ce couple de butées conjuguées correspondant à l'extension maximale d'un tel dispositif est par ailleurs sujet à la flexion.

Enfin, dans l'état actuel de la technique, pour un support télescopique selon l'art antérieur et à plus d'un niveau haut, la prise d'appui cumulative de toutes les butées conjuguées, les une sur les autres, ne peut être garantie

Le dispositif télescopique selon l'invention pallie ces différents inconvénients et aléas.

Il prévoit la prise d'appui d'un arc de butée unique, aménagé sur l'un des éléments télescopiques, sur les bases étagées des butées cylindriques aménagées sur l'autre élément télescopique.

Il prévoit le recours à des arcs cylindriques définissant des structures de butées creuses, intégrées à leurs éléments télescopiques respectifs. Il en découle, pour un dispositif d'une hauteur initiale et d'un diamètre donné, étant donné les surfaces de prise d'appui plus grandes pouvant être prévues sur des butées creuses, la possibilité de prévoir un plus grand nombre de positions de prise d'appui. Un tel dispositif évite par ailleurs les inconvénients du recours à des solutions mixtes à résistance décroissante, consistant, pour les niveaux de prise d'appui inférieurs, à cumuler les faibles résistances de plusieurs arcs de butée cylindriques de faible longueur, tout en prévoyant, au niveau d'extension maximale, la prise d'appui sur un unique arc de butée cylindrique de grande longueur.

Il prévoit en outre un élément vertical, en saillie, dans le prolongement partiel de la paroi cylindrique de l'élément télescopique femelle, du côté de son ouverture, aménagé dans une position circonférentielle qui chevauche le plan passant à la fois par l'axe de l'élément télescopique femelle et par la position circonférentielle du centre du logement du doigt-guide, de sorte à accroître l'effet du bras de levier allant du doigt-guide à l'arête de l'élément en saillie , qui, en prenant appui sur les nervures de l'élément mâle, assure le maintien du parallélisme des axes des deux éléments télescopiques au moment où l'axe de l'élément télescopique femelle tend à s'écarter de celui de l'élément télescopique mâle sous l'effet de son poids.

Il prévoit en même temps que cet élément vertical, en saillie, engrène avec un créneau horizontal vide conjugué, aménagé en périphérie de l'extrémité borgne de l'élément télescopique supérieur, faisant fonction de platine d'appui sur l'objet à supporter.

Enfin, le dispositif télescopique selon l'invention prévoit des surfaces de contact additionnelles, mobiles entre la partie femelle et la partie mâle, de sorte à allonger temporairement la partie mâle et à accroître ainsi le recouvrement entre les deux éléments télescopiques avant et après que la partie femelle ait atteint sa position d'extension maximale.

Ainsi, selon une première caractéristique de l'invention, le dispositif télescopique de support à extension incrémentale dont le maintien des allongements incrémentaux successifs est obtenu, aux différents niveaux, par la prise d'appui de butées verticales conjuguées, en saillie par rapport aux surfaces intérieures aux extrémités axiales des deux éléments télescopiques le constituant, qui sont au contact, soit de l'équipement à supporter, soit de la surface sur laquelle repose le dispositif, le choix d'une base de prise d'appui étant déterminé par la position d'un doigt-guide, solidaire de l'un des éléments télescopiques déplaçable en rotation, et coopérant avec un système de segments de guidage dudit doigt-guide qui constitue un circuit fermé, aménagé à la périphérie de l'autre élément télescopique, le choix d'un d'appui étagé d'une hauteur donnée résultant de mouvements d'ascension et d'abaissement successifs de l'élément télescopique supérieur, est pourvu de butées de prise d'appui, aménagées sur les deux éléments télescopiques, constituées d'arcs cylindriques définissant des structures de butées creuses ayant pour centre l'axe commun de leurs éléments télescopiques respectifs, à raison, d'une part, d'un arc cylindrique de butée unique, sur l'un d'eux, de section verticale trapézoïdale, sa paroi oblique radialement extérieure étant dégagée de la paroi cylindrique intérieure de l'élément télescopique et ses quatre parois obliques formant un orifice débouchant au niveau de la surface plane supérieure de l'extrémité borgne de l'élément télescopique supérieur, les dimensions de son périmètre d'assise sur la surface plane, inférieure, de cette même extrémité borgne de l'élément télescopique supérieur, étant supérieures à celles, à son autre extrémité, du périmètre trapézoïdale de sa surface de prise d'appui, et à raison, d'autre part, sur l'autre élément télescopique, d'une suite circonférentielle d'arcs cylindriques de butée étagés ayant une assise cylindrique creuse, circulaire, commune, la paroi extérieure de l'élément télescopique inférieur étant prolongée intérieurement par la paroi extérieure de la série circonférentielle d'arcs cylindriques, la jonction annulaire de leurs extrémités inférieures définissant le plan horizontal de prise d'appui du dispositif sur le sol et ayant préférentiellement une forme en U. Un tel aménagement accroît la résistance mécanique de la série circonférentielle d'arcs cylindriques de butées creuses étagées à la pression verticale s'exerçant sur le dispositif.

Selon une autre caractéristique, l'extrémité inférieure de l'élément télescopique inférieur comporte, en son centre, une ouverture de même diamètre que celui de la paroi intérieure du cylindre intérieur de la série circonférentielle d'arcs cylindriques de butée étagés qui définit les structures de butée creuses, et ladite ouverture reçoit une bague à filetage intérieur, préférentiellement dotée, à sa périphérie, d'un moyen de blocage, par exemple par ergot, dans laquelle est vissé un vérin mécanique de réglage fin, ledit vérin mécanique à vis étant pourvu d'une tête dont l'extrémité, au contact du sol, est convexe et, préférentiellement, pourvue d'encoches de réglage.

Selon une autre caractéristique de l'invention, sur l'élément télescopique pourvu de la suite circonférentielle d'arcs cylindriques de butée étagés, la distance séparant sa paroi intérieure de la paroi extérieure de la série circonférentielle d'arcs cylindriques de butée étagés est, d'une part, supérieure à la somme des épaisseurs, respectivement, de la paroi cylindrique de l'autre élément télescopique, de la hauteur du relief des nervures définissant le circuit fermé du système de segments parcouru par le doigt-guide et se trouvant aménagé à sa surface, ainsi que, préférentiellement, de la distance séparant, à son niveau de prise d'appui, la paroi radialement extérieure par rapport à l'axe vertical du dispositif, de la paroi cylindrique intérieure de l'autre élément télescopique et, d'autre part, préférentiellement inférieure à la distance la séparant de la paroi extérieure de la tête cylindrique du vérin installé sur le dispositif télescopique.

Selon une autre caractéristique, le doigt-guide est clipsable et comporte, dans sa longueur, quatre parties, l'une, cylindrique, à son extrémité intérieure et d'une longueur équivalente à la profondeur des nervures qui délimitent le système de cames à la surface de l'un des éléments télescopiques, la seconde, légèrement tronconique, dont l'extrémité extérieure prend appui, après son franchissement, par effet ressort, d'un étranglement aménagé dans l'axe du logement prévu sur l'autre des éléments télescopiques, sur sa paroi intérieure, la troisième correspondant à la partie venant se loger dans ce même étranglement, une fois que le doigt a été verrouillé en position, et la quatrième ayant un diamètre lui permettant de prendre appui sur les parois du logement cylindrique du doigt-guide, à son extrémité extérieure.

Selon une autre caractéristique de l'invention, au moins un élément disposé verticalement, en saillie, en arc de cercle, prolongeant, à son extrémité ouverte, la paroi cylindrique de l'élément télescopique femelle et assurant une surface de contact additionnelle entre les deux éléments télescopiques, d'une hauteur égale à l'épaisseur de la platine d'appui sur l'objet à supporter qui se trouve à l'extrémité supérieure de l'élément télescopique mâle, engrène avec au moins un créneau horizontal vide aménagé à la périphérie de l'élément mâle, et occupe une position circonférentielle qui chevauche le plan passant à la fois par l'axe de l'élément télescopique femelle et par la position circonférentielle du logement du doigt-guide.

Selon une autre caractérisé de l'invention, au moins un espace de rotation pour au moins un créneau horizontal en saillie et en périphérie de l'extrémité borgne de l'élément télescopique mâle est ménagé dans le créneau vertical vide conjugué se trouvant dans le haut de la paroi de l'élément télescopique femelle, afin de permettre le blocage du dispositif en position compacte, par rotation, de l'un des éléments télescopiques par rapport à l'autre.

Selon une autre caractéristique de l'invention, une surface de contact additionnelle est prévue et constituée d'un arc cylindrique mobile, relié de manière coulissante à l'élément télescopique supérieur, de sorte à créer une extension temporaire partielle ou circulaire de l'élément télescopique supérieur, intégralement ou partiellement en appui sur la paroi intérieure de l'autre élément télescopique, durant le cycle d'extension / compression du dispositif.

Selon une autre caractéristique de l'invention, l'arc cylindrique intercalaire mobile coulissant est de même centre que les, et de rayon intermédiaire à ceux des, cylindres des parties mâle et femelle, d'une épaisseur égale à la hauteur du relief des nervures qui définissent le système de guidage aménagé en périphérie de l'un des éléments télescopiques, de sorte à coulisser verticalement entre la surface extérieure de l'élément télescopique mâle et la paroi intérieure de l'élément télescopique femelle et en ce qu'il est maintenu solidaire du cylindre de l'élément mâle.

Selon une autre caractéristique de l'invention, la longueur de la course verticale de l'arc cylindrique intercalaire mobile coulissant est déterminée, d'une part, par la longueur la plus courte d'au moins une lumière aménagée sur l'élément télescopique mâle et d'autre part, par la course d'un élément en saillie, relié à, et perpendiculaire à l'axe de l'élément télescopique mâle, qui en coulissant à l'intérieur de ladite lumière assure la jonction mobile, par une attache, par exemple clipsée, entre l'élément télescopique mâle et l'arc cylindrique intercalaire mobile coulissant, intérieurs, l'un et l'autre, à l'élément télescopique femelle.

Selon une dernière caractéristique l'arc cylindrique intercalaire comporte en sa partie supérieure un logement orienté selon sa génératrice, dont l'extrémité supérieure ouverte coulisse le long d'une nervure verticale de guidage en saillie sur l'élément mâle, et l'arc cylindrique intercalaire comporte en sa partie supérieure un logement orienté selon sa génératrice, dont l'extrémité supérieure ouverte coulisse le long d'une nervure verticale de guidage en saillie sur l'élément mâle, et un ressort en compression, formant un zigzag planaire solidaire de l'arc cylindrique intercalaire à l'extrémité inférieure du logement ouvert, par exemple monobloc avec celui-ci, prend appui, à son extrémité supérieure, sur l'extrémité de la nervure verticale.

À titre d'illustration, des dessins sont joints, qui représentent, de façon non limitative, un tel support télescopique.

La figure la représente une vue tridimensionnelle de ¾, vue d'en haut, en coupe verticale, représentant les deux éléments télescopiques (1 et 2) du dispositif au moment où la surface trapézoïdale de prise d'appui de l'arc cylindrique de butée unique (24) de l'élément télescopique supérieur (1), de section verticale trapézoïdale, est en appui sur la surface trapézoïdale de l'arc cylindrique de butée creuse de prise d'appui la plus haute de la série circonférentielle d'arcs cylindriques (26) faisant partie intégrante de l'élément télescopique inférieur (2).

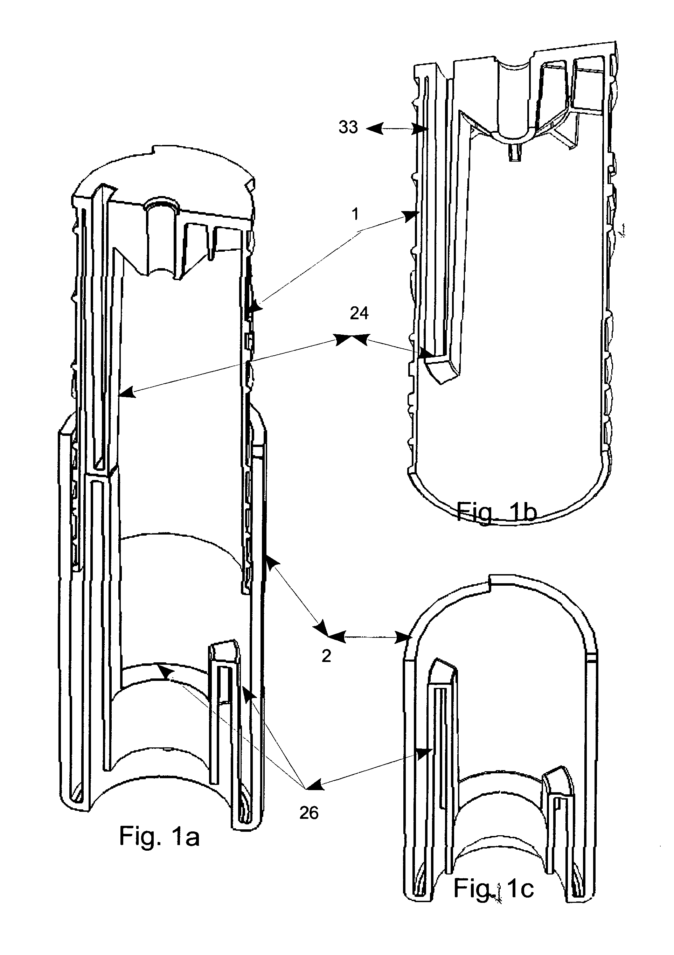

La figure 1b représente une vue tridimensionnelle de ¾, vue d'en bas, en coupe verticale, agrandie par rapport à la figure 1a, de l'élément télescopique mâle (1), sur laquelle apparaît l'arc cylindrique de butée unique (24), de section trapézoïdale et dont la paroi radialement extérieure (33) est disjointe de la paroi intérieur de l'élément télescopique mâle (1).

La figure 1c représente une vue tridimensionnelle de ¾, vue d'en haut, en coupe verticale, de taille réduite en hauteur par rapport à la figure 1a, de l'élément télescopique femelle (2), sur laquelle apparaissent, de gauche à droite, a) l'extrémité de la surface de prise d'appui de l'arc cylindrique de butée correspondant au niveau de plus forte extension du dispositif ; b) la surface de prise d'appui de l'arc cylindrique de butée sur laquelle l'arc cylindrique de butée unique prend appui en l'absence d'extension ; c) l'extrémité de la surface de prise d'appui de l'arc cylindrique de butée correspondant au premier niveau d'extension.

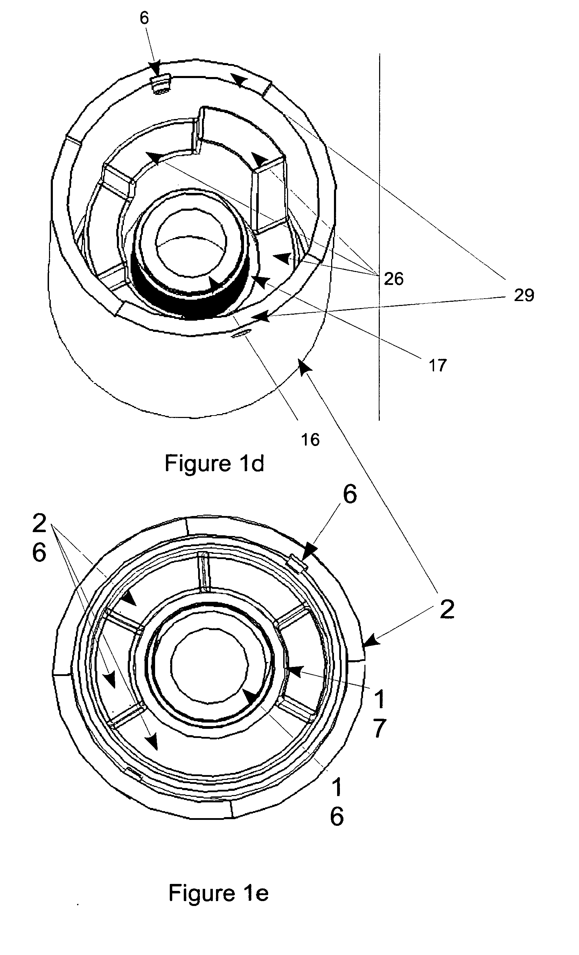

La figure 1d représente une vue de ¾, intérieure et extérieure, tridimensionnelle, d'une partie télescopique inférieure femelle (2), comportant une série circonférentielle d'arcs cylindriques définissant des structures de butées creuses étagées (26), les niveaux hauts des butées creuses ayant une longueur angulaire et une profondeur radiale uniformes, une bague de vérin (17), filetée intérieurement, dans laquelle est introduite une vis creuse de vérin (16), deux éléments en arc de cercle, en saillie (29), sur la tranche extérieure de l'élément télescopique femelle (2).

La figure 1e représente sur une vue de dessus, intérieure, d'un élément télescopique inférieur femelle (2), la série circonférentielle d'arcs cylindriques définissant des structures de butées creuses (26) dont les quatre niveaux hauts présentent des surfaces de prise d'appui uniformes, l'épaulement (18) de la bague (17) de vérin , la vis de vérin (16), le doigt-guide (6).

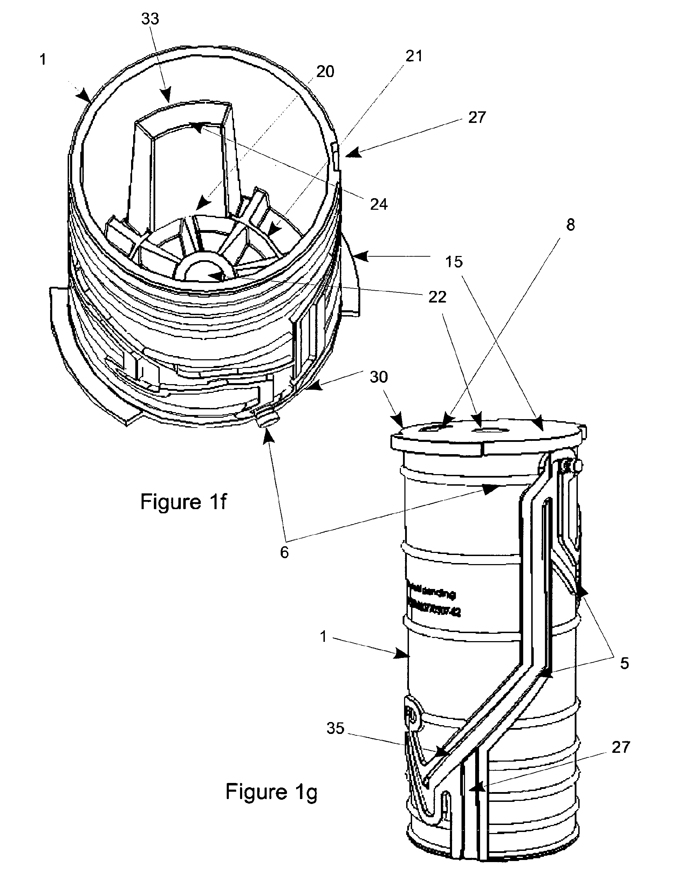

La figure 1f représente une vue de ¾, intérieure et extérieure, tridimensionnelle, d'un élément télescopique supérieur mâle (1), en position retournée, comportant un arc cylindrique unique, aux sections verticale et horizontale trapézoïdales, définissant une structure de butée creuse (24), dont la paroi, radialement extérieure (33) par rapport à l'axe vertical du dispositif, fait face à la paroi cylindrique intérieure de l'élément télescopique mâle (1) et dont le périmètre d'assise (7) sur la surface définissant, intérieurement, l'extrémité borgne de l'élément télescopique, a une surface supérieure à celle, à son autre extrémité, du périmètre trapézoïdale de sa surface de prise d'appui sur la série circonférentielle d'arcs cylindriques définissant des structures de butées creuses sur l'élément télescopique femelle. Sont également présentées, des nervures de consolidation (21) du logement (22) d'une tige de fixation du dispositif, aménagé au centre de la surface extérieure de l'extrémité borgne (15) de l'élément télescopique (1), un créneau horizontal vide (30).

La figure 1g représente une vue extérieure, tridimensionnelle, de l'élément télescopique supérieur mâle (1), de son système de segments de guidage (5) du doigt (6), du segment de jonction (27), de la nervure de blocage (35), pour le doigt-guide (6), de l'accès au système de segments de guidage (5), de l'orifice (8) formé sur la surface extérieure de l'extrémité borgne (15) de l'élément télescopique et à la base, correspondant au débouché de la partie creuse de l'arc cylindrique définissant une structure de butée creuse unique (24), de deux créneaux horizontaux vides (30) formant des arcs de cercle dont les centres respectifs sont préférentiellement inscrits dans un même plan passant par l'axe vertical du dispositif.

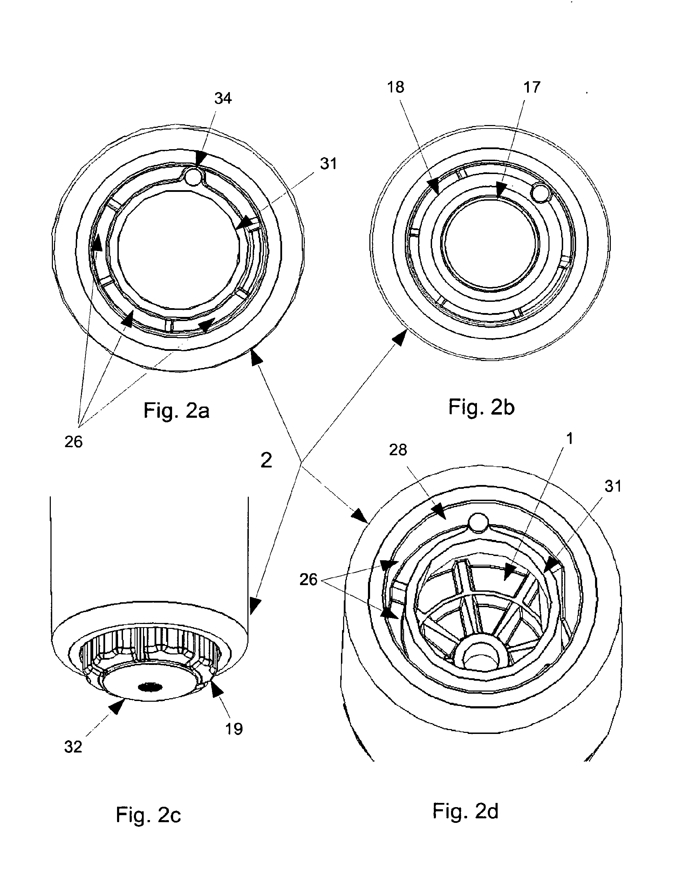

La figure 2a représente, sur un élément télescopique inférieur (2), une vue de dessous selon l'axe de l'élément du cylindre intérieur ouvert (31) de la série circonférentielle d'arcs cylindriques définissant des structures de butées creuses (26) et en sa périphérie, un ergot de blocage (34).

La figure 2b représente, sur un élément télescopique inférieur (2), une vue de dessous selon l'axe de l'élément de la partie filetée d'une bague de vérin (17) introduite dans le cylindre intérieur de la série circonférentielle d'arcs cylindriques définissant des structures de butées creuses (26) et de son épaulement (18) comportant une encoche, dans laquelle est engagé l'ergot de blocage (34), solidaire du cylindre intérieur de la série circonférentielle d'arcs cylindriques (26).

La figure 2c représente, sur un élément télescopique inférieur (2), une vue ¾ de dessous, tridimensionnelle, de la tête de vérin (19), pourvue d'une surface d'appui convexe (32) et partiellement introduite dans la cavité ménagée sous la série circonférentielle d'arcs cylindriques définissant des structures de butées creuses.

La figure 2d représente, sur un élément télescopique inférieur (2) une vue ¾ de dessous, tridimensionnelle, des parois cylindriques intérieure (31) et extérieure (28) de la série circonférentielle d'arcs cylindriques définissant des structures de butées creuses (26), la paroi cylindrique extérieure (28) étant dans le prolongement de la paroi cylindrique du logement de la tête du vérin, ainsi que, intérieurement, le fond de l'élément mâle (1).

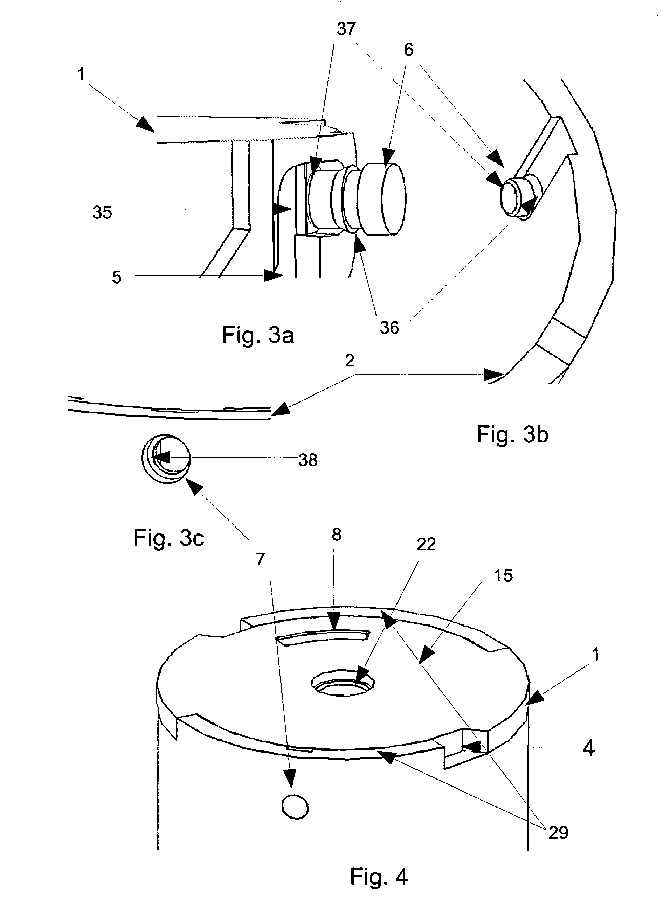

Les figures 3a, b et c représentent, successivement, des vues tridimensionnelles d'un doigt-guide (6), illustrées isolées en fig.3a, en appui sur la base d'un segment de blocage latéral du doigt du système de segments de guidage (5) aménagé sur un élément télescopique mâle (1), comportant respectivement, de son extrémité intérieure au dispositif vers son extrémité extérieure : une extrémité chanfreinée (37) qui facilite le franchissement des nervures de blocage (35) latéral du doigt , un épaulement tronconique (36) de maintien en position du doigt (6) après que celui-ci ait traversé un étranglement (38) (fig. 3c) aménagé dans son logement (7) prévu à l'intérieur de la paroi de l'élément télescopique femelle (2) (fig. 3b).

La figure 4 représente, à l'extrémité supérieure de l'élément télescopique mâle (1), la surface extérieure de son extrémité borgne (15) sur laquelle sont aménagés des espaces de rotation (4) permettant le blocage de l'élément télescopique femelle (2) sur l'élément télescopique mâle (1) au moment où le dispositif est en position compacte, le logement (7) du doigt-guide, le logement (22) prévu pour l'introduction d'une fixation à l'équipement à supporter et les arcs cylindriques de rehaussement (29) formant créneaux, de l'élément télescopique femelle (2).

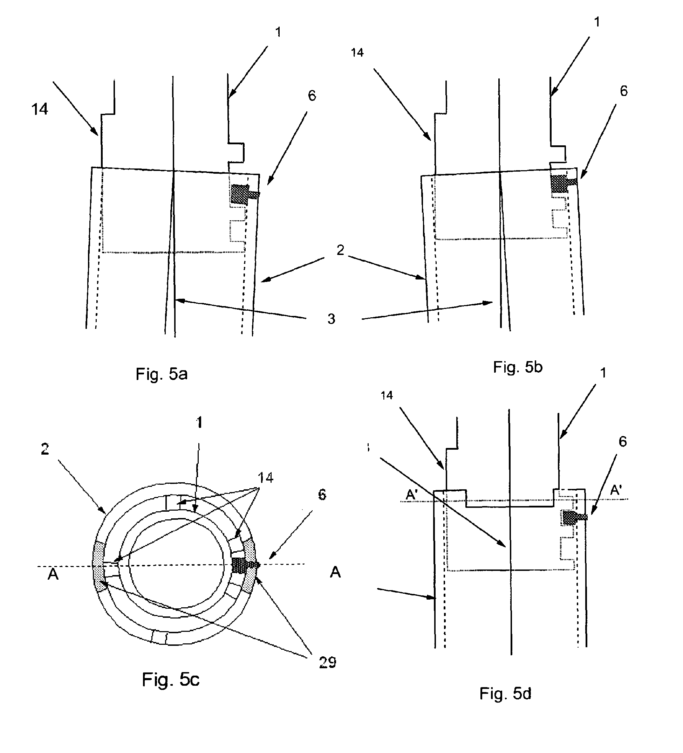

La figure 5a représente une vue plan de l'emboîtement du bas d'une partie mâle (1) dans le haut d'une partie femelle (2), l'intersection du plan déterminé par l'ouverture haute de l'élément femelle avec la paroi cylindrique de l'élément mâle, en un point diamétralement opposé à la position du doigt-guide (6) sur l'élément femelle, soit à un niveau supérieur à son intersection avec le plan passant à la verticale du doigt-guide (6) au moment où celui-ci se trouve à un point d'infléchissement d'un segment descendant / ascendant du système de segments de guidage du doigt (5) aménagé en périphérie de l'élément mâle (1), faisant apparaître une mise en biais des éléments par l'angle repéré (3) entre les axes desdits élements.

La figure 5b représente une vue plan de l'emboîtement du bas d'une partie mâle (1) dans le haut d'une partie femelle (2), l'intersection du plan déterminé par l'ouverture haute de l'élément femelle avec la paroi cylindrique de l'élément mâle, en un point diamétralement opposé à la position du doigt-guide (6) sur l'élément femelle, soit à un niveau inférieur à son intersection avec le plan passant à la verticale du doigt-guide (6) au moment où celui-ci se trouve à un point d'infléchissement d'un segment descendant / ascendant du système de segments de guidage (5) aménagé en périphérie de l'élément mâle (1) faisant apparaître une mise en biais des éléments par l'angle repéré (3) entre les axes desdits éléments.

La figure 5c représente une vue en coupe selon A' - A' des éléments mâle et femelle du dispositif télescopique, l'emboîtement du bas d'une partie mâle (1) dans le haut d'une partie femelle (2), l'élément femelle (2) comportant des arcs cylindriques de rehaussement (29) dont les centres sont inscrits dans le plan A-A passant, d'une part par l'axe de l'élément femelle (2) et, d'autre part, par la position circonférentielle du centre du logement du doigt-guide (6), et qui prennent appui sur des nervures (14) en saillie sur l'élément mâle (1).

La figure 5d représente une vue plan de l'emboîtement du bas d'une partie mâle (1) dans le haut d'une partie femelle (2), la ligne de coupe A' - A' traversant en leurs centres les arcs cylindriques de rehaussement (29) de la paroi cylindrique femelle (2) qui prennent appui sur des nervures (14) en saillie sur l'élément mâle (1), les axes respectifs (3) des parties mâle (1) et femelle (2) étant confondus.

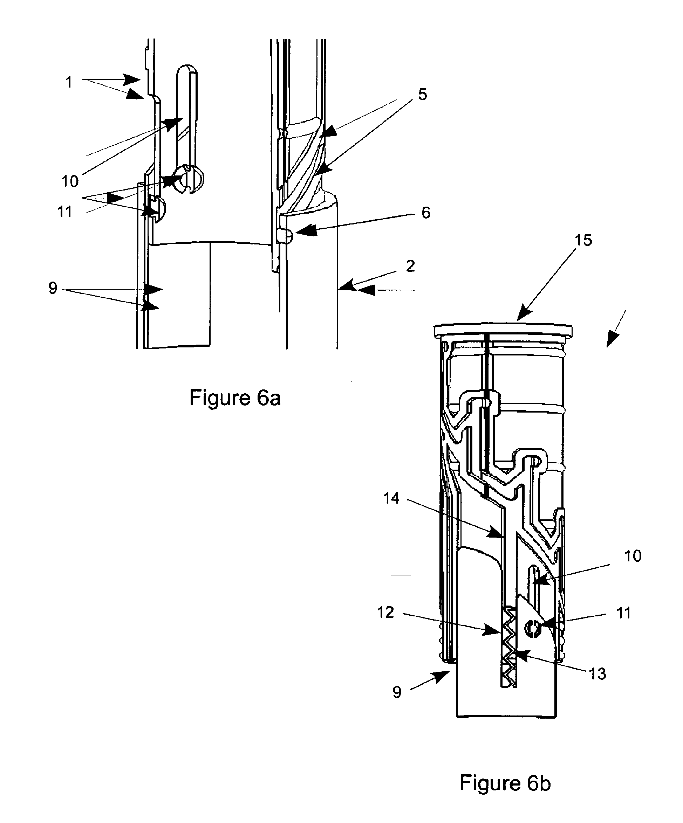

La figure 6a représente une vue écorchée des parties emboîtées, respectivement inférieure, de l'élément mâle (1), et supérieure, de l'élément femelle (2), entre lesquelles apparaissent, l'arc cylindrique intercalaire mobile (9) dans sa position d'abaissement maximum, deux lumières (10) sur l'élément mâle (1), chacune étant traversée par une attache (11) solidaire de l'arc cylindrique intercalaire (9) et le doigt-guide (6) solidaire de l'élément femelle.

La figure 6b représente une vue frontale, extérieure, en perspective, de l'élément mâle (1) « allongé », sur une partie de sa circonférence, d'une longueur correspondant à l'abaissement maximum de l'arc cylindrique intercalaire mobile (9), l'attache clipsée (11) ayant atteint la limite inférieure de sa course dans la lumière (10), le ressort (13) formant un zigzag planaire, solidaire, à son extrémité inférieure, de l'arc cylindrique intercalaire mobile et se détendant/comprimant dans un logement (12) aménagé dans l'élément supérieur de l'arc cylindrique intercalaire mobile (9), orienté selon sa génératrice et ouvert à son extrémité opposée, coulissant le long d'une nervure verticale (14) en saillie sur l'élément mâle, le ressort (13) prenant appui sur l'extrémité inférieure de la nervure verticale (14).

Pour une hauteur initiale et un diamètre donné d'un dispositif télescopique selon l'invention, le mode de réalisation présenté, fondé sur l'utilisation, sur l'élément télescopique femelle, d'une série circonférentielle d'arcs cylindriques de butées creuses ayant une assise circulaire, et, sur l'élément télescopique mâle, d'un seul arc cylindrique de butée de section verticale trapézoïdale, aux parois obliques sensiblement de même épaisseur, dégagées de la paroi verticale intérieure de l'élément télescopique mâle et ayant une assise, sur la surface de l'extrémité borgne intérieure prévue à l'extrémité supérieure de l'élément télescopique mâle, en forme d'arc cylindrique, permet d'obtenir une résistance élevée et uniforme à la pression verticale, à tous les niveaux d'extension du support télescopique, respectivement avant et après le blocage en position.

Grâce à la profondeur axiale accrue de la suite circonférentielle d'arcs cylindriques de butées creuses, le centrage de la poussée vertical de l'élément télescopique supérieur sur l'élément télescopique inférieur, accru par rapport ce que prévoit les dispositifs selon l'art antérieur, assure une meilleure stabilité latérale du dispositif et évite les désalignements des axes des deux éléments télescopiques.

Grâce à la statique retenue pour l'aménagement des butées creuses, le dispositif selon l'invention peut être utilisé en bi-mode, avec ou sans vérin, le poids de l'équipement supporté reposant, dans le premier cas, uniquement sur la paroi cylindrique intérieure des butées, tandis que dans le second cas il repose uniquement sur la paroi cylindrique extérieure de la série circonférentielle d'arcs cylindriques de butées creuses.

L'utilisation bi-mode du dispositif selon l'invention, soit avec ou sans vérin, permet d'accroître la plage des amplitudes pouvant être obtenue avec un même dispositif d'extension incrémentale.

Pour satisfaire un souci esthétique, la tête du vérin peut être préférentiellement et partiellement emboîtée dans une cavité cylindrique aménagée dans le bas de l'élément télescopique inférieur délimitée sur son pourtour par la paroi cylindrique extérieure de la série circonférentielle de butées creuses. Des encoches sur sa périphérie, accessibles lorsque l'emboîtement de la butée est maximum, permettent le réglage fin du dispositif après qu'ait été opéré le choix de l'une des hauteurs prédéfinies du dispositif, voire des gains en amplitude au-delà de ceux permis par l'extension incrémentale.

L'extraction du vérin permet, au contraire, d'abaisser la hauteur minimale du dispositif, l'aménagement en forme d'U, arrondi vers l'extérieur, de l'extrémité inférieure de l'élément télescopique au contact du sol, permettant de préserver la possibilité d'incliner le dispositif et donc de l'équipement qu'il supporte, par exemple un sommier.

Deux créneaux cylindriques préférentiellement aménagés en saillie sur l'extrémité ouverte de l'élément télescopique femelle et deux créneaux cylindriques horizontaux vides conjugués, aménagés à la périphérie de l'élément mâle et, par ailleurs, la position du doigt-guide choisie telle qu'elle garantit une longueur suffisante du bras de levier constitué par la distance doigt-guide / arête supérieure de l'un des créneaux en saillie, permettent d'éviter le désalignement des axes des éléments télescopiques mâle et femelle dans les positions d'extension du dispositif, proches du maximum, de sorte à maximiser l'amplitude de l'extension incrémentale du dispositif. Les arcs décrits par les créneaux cylindriques horizontaux en saillie sur la partie mâle sont dimensionnés de telle sorte que leurs longueurs soient inférieures à celles des arcs décrits par les créneaux cylindriques verticaux vides se trouvant dans le haut de la paroi cylindrique de la partie femelle, d'une longueur au moins égale à celle de l'arc décrit par le doigt-guide dans le segment de blocage horizontal du système de segments de cames en périphérie de la partie mâle, de sorte à en permettre le blocage en l'absence de toute extension. Selon que ce, voire ces écarts/espaces de rotation est/sont à droite des créneaux en saillie sur la partie mâle, ou à sa/leur gauche, le dispositif est, de manière visible par l'utilisateur, respectivement bloqué ou débloqué.

Pour pallier l'épaisseur réduite de la paroi de l'élément femelle, la conformation du doigt-guide assure sa stabilité axiale dans son logement, évite le risque d'arrachement au moment des prises d'appui sur les arêtes supérieures des segments de cames, facilite son montage à partir de l'extérieur, l'élasticité de sa matière lui permettant par ailleurs de pénétrer, dans le système de segments de guidage du doigt à travers le segment de jonction, et dans les segments horizontaux de blocage pour y rester prisonnier.

## Revendications

1. Dispositif télescopique de support à extension incrémentale dont le maintien des allongements incrémentaux successifs est obtenu, aux différents niveaux, par la prise d'appui de butées verticales conjuguées, en saillie par rapport aux surfaces intérieures des extrémités axiales des deux éléments télescopiques le constituant, qui sont au contact, soit de l'équipement à supporter, soit de la surface sur laquelle repose le dispositif, le choix d'une base de prise d'appui étant déterminé par la position d'un doigt-guide, solidaire en saillie par rapport aux surfaces intérieures aux extrémités axiales borgnes des deux éléments
télescopiques le constituant (1, 2), le choix d'une base de prise d'appui étant déterminé par la position d'un doigt-guide (6), solidaire de l'un des éléments télescopiques (2) déplaçable en rotation, et coopérant avec un système de segments de guidage (5) dudit doigt-guide (6) qui constitue un circuit fermé, aménagé à la périphérie de l'autre élément télescopique (1), le choix d'un d'appui étagé d'une hauteur donnée résultant de mouvements d'ascension et d'abaissement successifs de l'élément télescopique supérieur, **caractérisé en ce que** les butées de prise d'appui aménagées sur les deux éléments télescopiques (1, 2) sont constituées d'arcs cylindriques définissant des structures de butées creuses (24, 26) ayant pour centre l'axe commun de leurs éléments télescopiques respectifs (1, 2), à raison, d'une part, d'un arc cylindrique de butée unique (24), sur l'un d'eux, de section verticale trapézoïdale, sa paroi oblique radialement extérieure (33) étant dégagée de la paroi cylindrique intérieure de l'élément télescopique (1) et ses quatre parois obliques formant un orifice débouchant (8) au niveau de la surface plane supérieure de l'extrémité borgne (15) de l'élément télescopique supérieur, les dimensions de son périmètre d'assise (7) sur la surface plane, inférieure, de cette même extrémité borgne (15) de l'élément télescopique supérieur, étant supérieures à celles, à son autre extrémité, du périmètre trapézoïdale de sa surface de prise d'appui, et à raison, d'autre part, sur l'autre élément télescopique, d'une suite circonférentielle d'arcs cylindriques de butée étagés (26) ayant une assise cylindrique creuse, circulaire, commune, et **en ce que** la paroi extérieure de l'élément télescopique inférieur est prolongée intérieurement par la paroi extérieure (28) de la série circonférentielle d'arcs cylindriques (26), la jonction annulaire (25) de leurs extrémités inférieures définissant directement ou indirectement la zone d'appui du dispositif sur le sol.

2. Dispositif télescopique de support à extension incrémentale selon la revendication 1, **caractérisé en ce que** l'extrémité inférieure de l'élément télescopique inférieur comporte, en son centre, une ouverture de même diamètre que celui de la paroi intérieure du cylindre intérieur de la série circonférentielle d'arcs cylindriques de butée étagés (26) qui définit des structures de butée creuses, et **en ce que** ladite ouverture reçoit une bague à filetage intérieur (17) de vissage d'un vérin mécanique de réglage fin (18), et **en ce que** ledit vérin mécanique à vis est pourvu d'une tête (19) dont l'extrémité au contact du sol est convexe (32).

3. Dispositif télescopique de support à extension incrémentale selon les revendications 1 et 2, **caractérisé en ce que**, sur l'élément télescopique pourvu de la suite circonférentielle d'arcs cylindriques de butée étagés (26), la distance séparant sa paroi intérieure de la paroi extérieure de la série circonférentielle d'arcs cylindriques de butée étagés (26) est supérieure à la somme des épaisseurs, respectivement, de la paroi cylindrique de l'autre élément télescopique, de la hauteur du relief des nervures (5) définissant le circuit fermé du système de segments parcouru par le doigt-guide (6) et se trouvant aménagé à sa surface.

4. Dispositif télescopique de support à extension incrémentale selon la revendication 1, **caractérisé en ce que** le doigt-guide (6) est clipsable dans l'élément télescopique le recevant et comporte, dans sa longueur, quatre parties, l'une, chanfreinée à son extrémité intérieure (37) et d'une longueur équivalente à la profondeur des nervures qui délimitent le système de segments de guidage (5) du doigt-guide (6) à la surface de l'un des éléments télescopiques, la seconde, légèrement tronconique (36), dont l'extrémité extérieure prend appui sur la paroi intérieure de la partie femelle (2) après son franchissement à force d'un étranglement (38) aménagé dans l'axe du logement (7) prévu sur l'élément télescopique femelle (2), la troisième partie étant logée dans l'étranglement (38) du logement (7) et la quatrième ayant un diamètre lui faisant prendre appui sur les parois cylindriques du logement (7) du doigt-guide (6) à son extrémité extérieure.

5. Dispositif télescopique de support à extension incrémentale selon la revendication 1, **caractérisé en ce qu'**au moins un créneau vertical, en saillie, en arc de cercle (29), prolongeant, à son extrémité ouverte, la paroi cylindrique de l'élément télescopique femelle (2) et assurant une surface de contact additionnelle entre les deux éléments télescopiques, d'une hauteur égale à l'épaisseur de l'extrémité borgne (15) de l'élément télescopique mâle (1) et prenant appui sur l'objet à supporter, engrène avec au moins un créneau horizontal vide (30) aménagé à la périphérie de l'élément mâle (1) et **en ce que** le créneau vertical en saillie (29) occupe une position circonférentielle qui chevauche le plan passant à la fois par l'axe de l'élément télescopique femelle et par la position circonférentielle du logement (7) du doigt-guide (6).

6. Dispositif télescopique de support à extension incrémentale selon les revendications 1 et 5, **caractérisé en ce qu'**au moins un espace de rotation (4) pour au moins un créneau horizontal en saillie et en périphérie de l'extrémité borgne (15) de l'élément télescopique mâle (1) est ménagé dans le créneau vertical vide conjugué se trouvant dans le haut de la paroi de l'élément télescopique femelle (2), afin de permettre le blocage du dispositif en position compacte, par rotation, de l'un des éléments télescopiques par rapport à l'autre.

7. Dispositif télescopique de support à extension incrémentale selon la revendication 1, **caractérisé en ce qu'**une surface de contact additionnelle est prévue et constituée d'un arc cylindrique mobile (9), relié de manière coulissante à l'élément télescopique supérieur (1), de sorte à créer une extension temporaire partielle ou circulaire de l'élément télescopique supérieur (1), intégralement ou partiellement en appui sur la paroi intérieure de l'autre élément télescopique (2), durant le cycle d'extension / compression du dispositif.

8. Dispositif télescopique de support à extension incrémentale selon la revendication 7, **caractérisé en ce que** l'arc cylindrique intercalaire mobile coulissant (9) est de même centre que les, et de rayon intermédiaire à ceux des, cylindres des parties mâle et femelle, d'une épaisseur égale à la hauteur du relief des nervures qui définissent le système de segments de guidage (5) du doigt-guide (6) aménagé en périphérie de l'un des éléments télescopiques, de sorte à coulisser verticalement entre la surface extérieure de l'élément télescopique mâle (1) et la paroi intérieure de l'élément télescopique femelle (2) et **en ce qu'**il est maintenu lié au cylindre de l'élément mâle (1).

9. Dispositif télescopique de support à extension incrémentale selon les revendications 7 et 8, **caractérisé en ce que** la longueur de la course verticale de l'arc cylindrique intercalaire mobile coulissant (9) est déterminée, d'une part, par la longueur la plus courte d'au moins une lumière (10) aménagée sur l'élément télescopique mâle (1) et d'autre part, par la course d'un élément en saillie, relié à, et perpendiculaire à l'axe de l'élément télescopique mâle, qui en coulissant à l'intérieur de la lumière (10) assure la jonction mobile, par une attache, par exemple clipsée (11), entre l'élément télescopique mâle (1) et l'arc cylindrique intercalaire mobile coulissant (9), intérieurs, l'un et l'autre, à l'élément télescopique femelle (2).

10. Dispositif télescopique de support à extension incrémentale selon les revendications 7, 8 et 9, **caractérisé en ce que** l'arc cylindrique intercalaire (9) comporte en sa partie supérieure un logement (13) orienté selon sa génératrice et **en ce que** l'arc cylindrique intercalaire (9) comporte en sa partie supérieure un logement (13) orienté selon sa génératrice, dont l'extrémité supérieure ouverte coulisse le long d'une nervure verticale de guidage (14) en saillie sur la partie mâle (1), et **en ce qu'**un ressort en compression, formant un zigzag planaire (12) solidaire de l'arc cylindrique intercalaire (9) à l'extrémité inférieure du logement ouvert (13), par exemple monobloc avec celui-ci, prend appui, à son extrémité supérieure, sur l'extrémité de la nervure verticale (14).

## Claims

1. Incrementally extendable telescopic mounting, the successive incremental extensions of which are obtained, at the different levels, by having matching vertical stops, projecting from the internal, axial, cap end surfaces of the two telescopic elements (1, 2) making up the device, in contact, either with the supported piece of equipment / furniture, or with the surface upon which the device rests, the choice of supporting surface being determined by the position of a guide lug (6), rigidly connected to one of the telescopic elements (2), displaceable in rotation, and cooperating with a set of segments (5) followed by said guide lug (6), which build up a peripherally laid out closed loop on the other telescopic element (1), the choice of a staged stop of a given height, resulting from successive raising and lowering movements of the upper telescopic element, **characterized in that** the bearing / supporting stops, laid out on the two telescopic elements (1, 2), are made up of cylindrical arcs defining hollow stop structures (24, 26) having as their centre, the common axis of their respective telescopic elements (1, 2), namely, on the one hand, a single cylindrical arc stop (24), on one of them, having a vertical trapezoid section, its slanting, radially outside wall being cleared from the telescopic element internal cylindrical wall (1) and its four slanting walls forming an emerging opening (8) in the upper flat surface of the upper telescopic element cap end (15), the dimensions of its seat surface perimeter on the lower flat surface of said upper telescopic element cap end (15) being larger than those, at its other end, of the trapezoid perimeter of its bearing surface and, namely, on the other hand, on the other telescopic element, a circumferential series of staged cylindrical arc stops (26) having a hollow cylindrical, circular, common seat surface, the outside wall of the lower telescopic element extending internally to the outside wall (28) of the circumferential series of cylindrical arcs (26), their lower ends annular junction (25) defining directly or indirectly the device's bearing surface area on the floor.

2. Incrementally extendable telescopic mounting a to Claim 1, **characterized in that** the lower end of the lower telescopic element, incorporates, at its centre, an opening having the same diameter as the one pertaining to the circumferential series of staged cylindrical arc stops and **in that**, said opening receives an internally threaded cylinder body, preferably endowed, at its periphery, with a locking system, e.g. by a snug, a fine adjustment jackscrew being screwed into said threaded cylinder body, said jackscrew being endowed with a head, the end part of which, in contact with the floor, being convex and preferably fitted out with adjustment notches.

3. Incrementally extendable telescopic mounting according to Claims 1 and 2, **characterized in that**, the distance separating the inside wall ot the telescopic element containing the circumferential series of staged cylindrical arc stops (26) from the radially outside wall of same is greater than that obtained by adding up the thickness of the other telescopic element's cylindrical wall and the height of the ribs making up the cam-type guiding system that defines the guide lug (6) path laid-out on the surface of said other telescopic element.

4. Incrementally extendable telescopic mounting according to Claim 1, **characterized in that** guide lug (6) can be clipsed onto the receiving telescopic element and incorporates, lengthwise, four parts, one, chamfered at its internal end (37) and having a length equivalent to the depth of the ribs delineating the cam-type guiding system (5) laid out on the surface of one of the telescopic elements, a second one, slightly tapered (36), the outer end of which rests upon the female element (2) inside wall after its crossing of a constricted opening (38), lodged, both axially and lengthwise, in the guide lug housing (7), provided on the female element (2), the third part being lodged inside the constricted housing (7) opening (38), and the fourth part having an extended, stop-collar diameter, and resting, at the housing (7) outer end, on the cylindrical guide lug (6) housing walls.

5. Incrementally extendable telescopic mounting according to Claim 1, **characterized in that** at least one vertically projecting arc element (29), extending, at its open end, the cylindrical female telescopic element (2) wall and providing an additional contact surface between the two telescopic elements, the projecting arc element height being equal to the thickness of the male telescopic element (1) cap end top plate (15) upon which the supported piece of equipment rests , meshes with at least one horizontal slot (30) laid out on the periphery of said male telescopic element, and **in that** the projecting vertical cylindrical arc element (29) has a circumferential position sitting astride the plane traversing both the female telescopic element axis and the circumferential position of the guide lug (6) housing.

6. Incrementally extendable telescopic mounting according to Claims 1 and 5, **characterized in that** at least one rotation space (4) for at least one horizontal arc element projecting from, and,peripheral to, the male telescopic element (1) cap end (15), is lodged in the empty vertical slot at the top end of the female telescopic element (2) wall, in order to provide, by rotation of one of the telescopic elements relative to the other, for the locking of the device in a compact state.

7. Incrementally extendable telescopic mounting according to Claim 1, **characterized in that** an additional contact surface is provided, that is made up of a mobile cylindrical arc extension element (9), fastened in a sliding manner to the upper telescopic element, so as to create a partial or circular temporary extension of the upper telescopic element (1), resting totally or partially upon the inside wall of the other telescopic element (2), during the device extension / compression cycle.

8. Incrementally extendable telescopic mounting according to Claim 7, **characterized in that** the mobile, sliding, cylindrical arc shaped extension element (9) has the same centre as, and a radius that is intermediate to those of, the male and female element cylinders, has a thickness equal to that of the rib relief defining the cam-type guiding system laid out on the periphery of one of the telescopic elements, so as to slide vertically between the external surface of the male telescopic element (1) and the inside wall of the female telescopic element (2) and **in that** it is kept attached to the male element cylinder.

9. Incrementally extendable telescopic mounting according to Claims 7 and 8, **characterized in that** the mobile, sliding, cylindrical arc shaped extension element (9) travel length is determined, on the one hand, by the shortest length of at least one oblong hole (10) laid out on the male telescopic element (1) and, on the other hand, by the travel of a projecting element, attached to, and perpendicular to, the male telescopic element axis, which, by sliding within the oblong hole (10), ensures the mobile junction, by an attachment, for instance by clipsing (11), between the male telescopic element (1) and the sliding, cylindrical arc shaped extension element (9), internal, the one and the other, to the female telescopic element (2).

10. Incrementally extendable telescopic mounting according to Claims 7, 8 and 9, **characterized in that** the sliding, cylindrical arc shaped extension element (9) incorporates, on its upper part, a generatrix oriented housing (13), the upper ending of which slides along a vertical guiding rib (14) projecting from the male part (1), and **in that** a spring under compression, forming a planar zigzag (12) connected with the open housing (13) bottom end, e. g. cast in one piece with said open housing (13) bottom end, rests, at its upper end, on the ending of the vertical rib (14).

## Patentansprüche

1. Teleskopische schrittweise ausziehbare Träger-Vorrichtung, deren aufeinander folgende schrittweise Verlängerungen, bis auf jede der verschiedenen, mittels gekoppelter senkrechter, aus den internen Flächen der axialen Enden der beiden teleskopischen Elemente herausragenden Anschläge, die entweder mit der zu unterstützenden Einrichtung oder mit der Oberfläche worauf die Vorrichtung ruht, Kontakt haben, sukzessiv erreichten Ebenen, wobei die Wahl einer unterstützenden Fläche durch die Position eines Führungsstiftes bestimmt wird, der aus einem Stück mit den internen, am Ende der blinden Enden der beiden teleskopischen Elemente (1, 2) der Träger-Vorrichtung, in axialer Richtung sich befindenden Flächen ist, wobei die Wahl einer unterstützenden Fläche durch die Position eines Führungstiftes (6) bestimmt wird, der aus einem Stück mit einem der teleskopischen, drehbaren und mit einem Führungssegment System (5) des betreffenden Führungsstiftes (6) zusammenwirkenden Element (2), ist, und der einen, an der Peripherie des anderen teleskopischen Elementes (1) eingerichteten, geschlossenen Kreis bildet, wobei die Wahl einer gestuften Stütze, mit einer gegebenen Höhe, sich aus sukzessiven Aufstieg- und Absenkungsbewegungen des oberen teleskopischen Elements ergibt, **dadurch gekennzeichnet dass** die auf beiden teleskopischen Elemente (1, 2) eingerichteten unterstützenden Anschläge aus zylindrischen Bogen gebildet sind, die hohle Anschlagstrukturen abgrenzen (24, 26), deren Zentrum die gemeinsame Achse
ihrer respektiven teleskopischen Elemente (1, 2) ist, und zwar, einerseits, auf einem der teleskopischen Elemente, aus einem einzigen zylindrischen Anschlagbogen (24) mit senkrechtem trapezförmigem Querschnitt, wobei seine schräge, radial externe Wand (33) freiliegend von der internen zylindrischen Wand des teleskopischen Elements ist und ihre vier schrägen Wände in Höhe der oberen, ebenen Fläche des blinden Endes (15) eine einmündende Öffnung (8) bilden, wobei die Masse ihres Auflageflächenumfangs, auf der ebenen, unteren Fläche desselben blinden Endes (15) des oberen teleskopischen Elementes, größer sind als diejenigen, an ihrem anderen Ende, des trapezförmigen Umfangs ihrer Auflagefläche, und zwar, andrerseits, auf dem anderen teleskopischen Element, aus einer umlaufenden Folge von zylindrischen, bogenförmigen, gestuften Anschlägen (26) die über einen gemeinsamen, kreisförmigen, hohlen zylindrischen Sitz verfügen und, **dadurch gekennzeichnet dass** die externe Wand des unteren teleskopischen Elementes intern durch die externe Wand (28) der umlaufenden Folge von zylindrischen, bogenförmigen Anschlägen (26) verlängert wird, wobei die ringförmige Verbindung (25) ihrer unteren Enden, direkt oder indirekt die Auflagezone der Vorrichtung auf dem Boden abgrenzt.

2. Teleskopische schrittweise ausziehbare Träger-Vorrichtung nach Anspruch 1, **dadurch gekennzeichnet dass** das untere Ende des teleskopischen Elementes, in seinem Zentrum, eine Öffnung gleichen Durchmessers wie derjenige der internen Wand des internen Zylinders der umlaufende Folge von zylindrischen, bogenförmigen gestuften Anschlägen (26) aufweist, die hohle Aufschlagstrukturen abgrenzt, und dadurch dass die besagte Öffnung einen Ring mit internem Gewinde (17) aufnimmt, zur Feineinstellung der Verschraubung einer Schraubenwinde (18), und dadurch dass die besagte Schraubenwinde mit einem Kopf (19) versehen ist, dessen Ende, das mit dem Boden Kontakt hat, nach außen gewölbt ist (32).

3. Teleskopische schrittweise ausziehbare Träger-Vorrichtung nach den Ansprüchen 1 und 2, **dadurch gekennzeichnet dass** , auf dem mit der umlaufenden Folge von zylindrischen, bogenförmigen gestuften Anschlägen (26) ausgestatteten teleskopischen Element, der Zwischenraum zwischen ihrer internen Wand und der externen Wand der umlaufenden Folge von zylindrischen, bogenförmigen gestuften Anschlägen (26) größer ist als die Summe der Dicken, respektive, der zylindrischen Wand des anderen teleskopischen Elements, und des, an dessen Oberfläche, die Schleife des Segmentsystems abgrenzenden, vom Führungsstift (6) durchgelaufenen Rippenreliefs (5).

4. Teleskopische schrittweise ausziehbare Träger-Vorrichtung nach dem Anspruch 1,
**dadurch gekennzeichnet dass**, mit einem Clip, der Führungsstift (6) im eingliedernden teleskopischen Element befestigt werden kann insofern er, in seiner Länge vier, Teile aufweist, der eine, an seinem internen Ende abgeschrägte Teil (37), mit einer, der Tiefe der, an der Oberfläche eines der teleskopischen Elemente sich befindenden, die Schweife des Segmentsystems abgrenzenden, vom Führungsstift (6) durchgelaufenen Rippenreliefs (5), entsprechenden Länge ; der zweite, leicht kegelstumpfartige Teil (36), dessen externes Ende sich nach seinem durch Druck bedingten Übersteigen einer in der Achse der Aufnahme (7) eingerichteten, auf der internen Wand des weiblichen Teiles (2) vorgesehenen Drosselung (38) stützt, wobei der dritte Teil innerhalb der Drosselung (38) der Aufnahme (7) eingebaut ist und wobei der vierte Teil einen Durchmesser hat wodurch er sich auf die am externen Ende der Aufnahme (7) liegenden zylindrischen Wände des Führungsstiftes (6) stützt.

5. Teleskopische schrittweise ausziehbare Träger-Vorrichtung nach dem Anspruch 1, **dadurch gekennzeichnet dass** mindestens eine senkrechte herausragende bogenförmige Zinne (29), die, an ihrem offenen Ende, die zylindrische Wand des teleskopischen weiblichen Elementes (2) verlängert und die eine zusätzliche Kontaktfläche, gleicher Höhe wie die Dicke des blinden Endes (15) des männlichen, sich auf den zu stützenden Gegenstand stützenden teleskopischen Elementes (1), zwischen den beiden teleskopischen Elementen gewährleistet, mit mindestens einer, an der Peripherie des männlichen Elementes (1) eingerichteten horizontalen leeren Zinne (30), einrückt, und dadurch dass die senkrechte herausragende bogenförmige Zinne (29) eine umlaufende Position einnimmt die beiderseits der Ebene übergreift die gleichzeitig durch die Achse des weiblichen teleskopischen Elementes und durch die umlaufende Position der Aufnahme (7) des Führungsfingers (6) läuft.

6. Teleskopische schrittweise ausziehbare Träger-Vorrichtung nach den Ansprüchen 1 und 5, **dadurch gekennzeichnet dass** mindestens ein Rotationsraum (4) für mindestens eine horizontale, herausragende und an der Peripherie des blinden Endes (15) des männlichen teleskopischen Endes (1) liegende Zinne, in der hohlen senkrechten gekoppelten Zinne die sich im oberen Teil des weiblichen teleskopischen Elementes (2) befindet, vorgesehen ist, um die Verriegelung der Vorrichtung in kompakter Position, durch Drehung eines teleskopischen Elementes im Verhältnis zum Anderen zu ermöglichen.

7. Teleskopische schrittweise ausziehbare Träger-Vorrichtung nach dem Anspruch 1, **dadurch gekennzeichnet dass** eine zusätzliche, aus einem mobilen zylindrischen Bogen (9) gebildete Kontaktfläche die in verschiebbarer Weise an das obere teleskopische Element (1) verbunden ist, um eine zeitlich begrenzte partielle oder kreisförmige Erweiterung des oberen teleskopischen Elements (1) zu schaffen, die gänzlich oder teilweise, während des Erweiterungs / Komprimierungszyklus der Vorrichtung, auf die interne Wand des anderen teleskopischen Elementes (2) aufliegt.

8. Teleskopische schrittweise ausziehbare Träger-Vorrichtung nach dem Anspruch 7, **dadurch gekennzeichnet dass** der mobile sich verschiebende zylindrische zwischengelegte Bogen (9) der mit den Zylindern der männlichen und weiblichen Teile eine gemeinsame Mitte teilt und einen Radius besitzt dessen Länge zwischen denjenigen des männlichen und weiblichen Zylinders liegt, eine Dicke die der Höhe des, das Führungssegmentsystem (5) des Führungsstiftes (6) abgrenzenden Rippenreliefs gleich ist, wobei das Führungssegmentsystem (5) an der Oberfläche eines der teleskopischen Elemente eingerichtet ist, um senkrecht, zwischen der Außenfläche des männlichen teleskopischen Elements (1) und der internen Wand des weiblichen teleskopischen Elementes (2) zu gleiten, und dadurch dass er mit dem Zylinder des männlichen Teiles (1) verbunden bleibt.

9. Teleskopische schrittweise ausziehbare Träger-Vorrichtung nach den Ansprüchen 7 und 8, **dadurch gekennzeichnet dass** die Länge der senkrechten Bewegung des mobilen sich verschiebenden zylindrischen zwischengelegten Bogens (9) einerseits durch die kürzeste Länge von wenigstens einem auf dem männlichen teleskopischen Element (1) eingerichteten Schlitzloch (10) bestimmt wird und, anderseits, durch die Bewegung eines vorspringenden, mit dem männlichen teleskopischen Element verbundenen, und rechtwinklig zu dessen Achse stehenden Teiles, das durch sein Gleiten im Innern des Schlitzlochs (10) die mobile Verbindung, mittels einer Halterung, zum Beispiel mit einer Clipse (11, zwischen dem männlichen teleskopischen Element (1) und dem sich verschiebenden zylindrischen zwischengelegten Bogen (9) ), innerhalb des weiblichen teleskopischen Elementes (2), sichert.

10. Teleskopische schrittweise ausziehbare Träger-Vorrichtung nach den Ansprüchen 7, 8 und 9, **dadurch gekennzeichnet dass**, in seinem oberen Teil, der zylindrische zwischengelegte Bogen (9) eine, nach seiner Mantellinie ausgerichtete Aufnahme (13) umfasst, deren oberes, offenes Ende einer, aus dem männlichen Element (1) vorspringenden senkrechten Führungsrippe (14) entlang gleitet, und dadurch dass eine, einen planaren Zickzack (12) bildende Druckfeder, in Blockkonstruktion mit dem zylindrischen zwischengelegten Bogen (9), sich an seinem oberen Ende auf das Ende der senkrechten Rippe (14) stützt.
